## Europäisches Patentamt
## European Patent Office
## Office européen des brevets

(19)

(11) Numéro de publication: **0 092 839**
**B1**

(12) **FASCICULE DE BREVET EUROPEEN**

(45) Date de publication du fascicule du brevet:
06.08.86

(51) Int. Cl.⁴: **B 01 D 46/24,** B 01 D 29/30

(21) Numéro de dépôt: 83104065.4

(22) Date de dépôt: 26.04.83

(54) Elément de filtration et procédés de fabrication de cet élément.

(30) Priorité: 28.04.82 FR 8207297

(43) Date de publication de la demande:
02.11.83 Bulletin 83/44

(45) Mention de la délivrance du brevet:
06.08.86 Bulletin 86/32

(84) Etats contractants désignés:
BE CH DE FR GB IT LI NL SE

(56) Documents cités:
CH - A - 603 211
FR - A - 2 123 504
FR - A - 2 228 518
LU - A - 40 761

(73) Titulaire: CERAVER Société anonyme dite:, 12, rue de la Baume, F-75008 Paris (FR)

(72) Inventeur: Gillot, Jacques, 5, Impasse de la Hount ODOS, F-65310 Laloubere (FR)
Inventeur: Berge, Roland, 44, rue Jean Moulin, F-65320 Borderes sur Echez (FR)

(74) Mandataire: Weinmiller, Jürgen et al, Zeppelinstrasse 63, D-8000 München 80 (DE)

ACTORUM AG

## Description

Elément de filtration et procédés de fabrication de cet élément

La présente invention concerne un élément de filtration, comprenant au moins une plaque d'extrémité non poreuse en céramique, ou en carbone, ou en verre, ou en métal, ou en matière synthétique, percée de trous, et une pluralité de tubes en céramique poreuse ou en carbone poreux, fixés dans les trous de la plaque d'extrémité par l'intermédiaire de raccords en un matériau remplissant des espaces entre l'extrémité des tubes et les trous de la plaque d'extrémité. Un tel élément est connu, par exemple à partir du document FR-A 2 123 504. L'invention s'étend en outre à des procédés de préparation d'un tel élément.

De tels éléments de filtration conviennent pour assurer la filtration de liquides, notamment dans des dispositifs de stérilisation de liquides alimentaires tels que celui qui a fait l'objet du document FR-A 2 473 313. Ils conviennent aussi pour assurer l'épuration de gaz, notamment de gaz très chauds et/ou corrosifs.

Ces éléments comportent deux plaques d'extrémité, le fluide à filtrer circulant à l'intérieur des tubes, d'une extrémité à l'autre de ceux-ci, et un filtrat passant à travers les tubes poreux, dans le cas de la filtration dite «tangentielle». Ils ne comportent qu'une seule plaque d'extrémité percée de trous dans le cas de la filtration dite directe, une autre plaque disposée à l'autre extrémité des tubes, celle-ci fermée, ne servant qu'à la maintenir mécaniquement.

La présente invention a pour but de procurer des éléments filtrants utilisables avec des fluides à filtrer très chauds ou corrosifs, fonctionnant avec une différence de pression élevée entre le fluide à filtrer et le filtrat et nettoyables à l'aide de fluides corrosifs.

L'élément de filtration selon l'invention est caractérisé en ce que le matériau des raccords est choisi dans le groupe formé par un émail, un verre, une matière céramique frittée, un ciment, du carbone, et un métal.

Selon un mode de réalisation de l'invention, notamment lorsque ce matériau est constitué par un émail ou un verre, il vient colmater les pores de la zone d'extrémité des tubes au niveau de la plaque d'extrémité.

Selon un mode d'exécution de l'invention, le diamètre interne de chaque tube est égal au diamètre interne du trou correspondant de la plaque d'extrémité, et l'extrémité du tube est disposée dans un épaulement de la plaque du côté interne de l'élément.

Selon un autre mode d'exécution, le diamètre externe de chaque tube est légèrement inférieur au diamètre interne du trou correspondant de la plaque d'extrémité, et ce dernier est entouré du côté externe de l'élément d'un épaulement qui est également rempli par le matériau du raccord.

Les tubes peuvent comprendre une couche épaisse à pores relativement gros, et au moins une couche plus mince à pores plus fins. Dans ce cas, la couche à pores plus fins peut venir recouvrir la surface de chant de l'extrémité du tube, ainsi qu'une partie de la surface externe de cette extrémité.

L'invention s'étend en outre à des procédés de fabrication de tels éléments.

Selon un premier procédé, lorsque le raccord est en un émail ou un verre, après avoir introduit les extrémités des tubes dans les trous d'une plaque d'extrémité et rempli au moins en partie l'espace subsistant entre chaque tube et la plaque d'une barbotine très concentrée d'une poudre de l'émail ou de verre, on soumet la zone des extrémités des tubes et de la plaque à une cuisson entraînant une fusion au moins partielle de l'émail ou du verre et le remplissage par capillarité, par cet émail ou ce verre, de la totalité de cet espace et des pores des extrémités des tubes au voisinage de la plaque.

On peut aussi colmater au cours d'une première cuisson les pores des extrémités des tubes entourées de la barbotine, avant de remplir au moins en partie l'espace subsistant entre chaque tube et la plaque de la barbotine et de soumettre la zone des extrémités des tubes et de la plaque à la cuisson.

Selon un autre procédé, lorsque le raccord est en une céramique frittée, après avoir introduit les extrémités des tubes dans les trous de la plaque d'extrémité, et rempli l'espace subsistant entre chaque tube et la plaque d'une barbotine d'une poudre de la céramique, on soumet la zone des extrémités des tubes et de la plaque à un traitement thermique assurant le frittage de la matière céramique.

Selon une variante, on peut remplacer la barbotine de poudre céramique par une matière qui peut être décomposée par chauffage pour devenir le matériau de raccord. On peut ainsi utiliser un ciment réfractaire, un ciment à base de phosphate d'aluminium, une pâte d'alumine hydratée, un polymère minéral ou organo-minéral.

Si nécessaire, on répète à plusieurs reprises les opérations de remplissage de l'espace subsistant entre chaque tube et la plaque et de traitement thermique de frittage jusqu'à obtenir une étanchéité parfaite de la jonction entre les tubes et la plaque.

Il est décrit ci-après, à titre d'exemples et en référence aux figures schématiques du dessin annexé, des éléments de filtration selon l'invention et leurs procédés de fabrication.

La fig. 1 représente en coupe un élément filtrant, dont deux tubes poreux seulement sont représentés, pour plus de clarté.

Les fig. 2, 3 et 4 représentent en coupe le raccordement d'un tube à une plaque d'extrémité, selon trois variantes de réalisation.

La fig. 5 représente en coupe une première variante de raccordement à une plaque d'extrémité d'un tube comportant une couche épaisse à gros pores et une couche interne mince à pores plus fins.

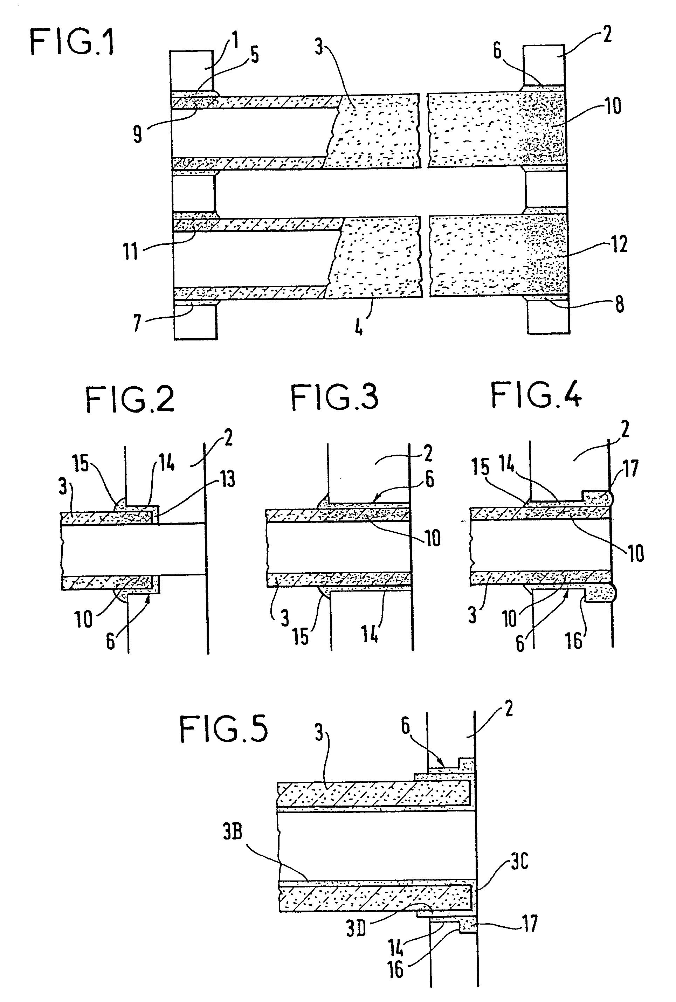

Dans la fig. 1, l'élément filtrant comporte deux plaques circulaires d'extrémité 1 et 2. Le fluide à filtrer arrive par la gauche de la plaque d'extrémité 1 dans les tubes cylindriques poreux tels que 3, 4. Un filtrat traverse les tubes poreux, puis est recueilli par une tuyauterie d'évacuation, non représentée. Une fraction résiduaire est évacuée à la droite de la plaque d'extrémité 2.

On comprendra qu'en pratique un élément filtrant comporte un plus grand nombre de tubes, par exemple 19 tubes formant un faisceau compact à écartement régulier.

Les plaques d'extrémité sont par exemple en alumine dense à 97%, et percées de trous de diamètre légèrement supérieur au diamètre externe des tubes poreux. Elles peuvent être aussi en d'autres matériaux, tels qu'un verre, un autre oxyde métallique fritté, tel que la silice ou la zircone, du carbure de silicium, du nitrure de silicium, de l'oxynitrure de silicium et d'aluminium (SiAlON), un borure, du carbone, un métal ou une matière synthétique.

Les tubes poreux ont une épaisseur de quelques millimètres, par exemple 1,5 mm. Leur porosité est de 25 à 45% en volume, et le diamètre moyen des pores de 2 à 50 μm. Lorsqu'ils comportent une couche de porosité plus fine, le diamètre des pores peut être compris, dans cette couche entre 0,002 et 40 μm. Ils peuvent comporter une première couche d'épaisseur, par exemple 20 μm, et de diamètre de pores de quelques microns, par exemple 1 à 3 μm. Ils peuvent aussi comporter une seconde couche de porosité encore plus fine, celle-ci ayant sensiblement la même épaisseur, avec des pores de diamètre quelques dixièmes de micron. Ils sont de préférence en alumine de pureté supérieure à 99,9%, mais peuvent être aussi en un autre oxyde métallique fritté, en un carbure, un nitrure, ou de l'oxynitrure de silicium et d'aluminium (SiAlON), en un borure, en verre fritté ou en carbone préparé par cuisson de grains de carbone enrobés dans un liant organique.

Les tubes poreux sont fixés de façon étanche dans les plaques d'extrémité par les raccords 5, 6, 7, 8. Ceux-ci sont soit en un matériau non poreux, soit en un matériau poreux dont le diamètre moyen des pores est inférieur à celui de la couche à porosité la plus fine des tubes de filtration. Ce matériau peut également remplir la porosité des tubes dans les zones où ils sont insérés dans les plaques d'extrémité et un peu au-delà, de façon à éviter toute fuite le long des raccords.

Avec des plaques d'extrémité et des tubes poreux en alumine, les raccords sont de préférence en un émail à base d'alumine, de silice, d'oxydes alcalins et alcalino-terreux, dont la température de fusion est voisine de 1300°C. Ils peuvent être aussi en un verre, en un matériau céramique consolidé par frittage, tel qu'un oxyde métallique, un carbure, un nitrure, ou de l'oxynitrure de silicium et d'aluminium (SiAlON), un borure, du carbone, un ciment, ou un métal. Il convient naturellement de veiller à ce que les coefficients de dilatation des plaques d'extrémités, des tubes poreux et des raccords soient proches les uns des autres.

Les raccords en émail ou en verre sont de mise en œuvre facile et assurent une étanchéité parfaite.

Les raccords en poudre céramique frittée de même nature que le matériau des tubes et plaques ont les avantages suivants:
– pas de contraintes thermiques, puisque les coefficients de dilatation des tubes, raccords et plaques sont identiques,
– la résistance à la corrosion du raccord n'est pas inférieure à celle des tubes et des plaques, ce qui élimine une source de pollution éventuelle des fluides à filtrer, s'ils sont corrosifs,
– les raccords sont aussi réfractaires que les tubes et les plaques, ce qui est avantageux pour la filtration de gaz très chauds.

Dans le raccord entre tube et plaque d'extrémité représenté en fig. 2, la plaque d'extrémité comporte un épaulement circulaire 13 de diamètre supérieur au diamètre externe du tube. Le matériau 14 du raccord est disposé entre la face d'extrémité du tube et l'épaulement, ainsi que sur le pourtour du tube dans l'alésage borgne formé dans la plaque. Un bourrelet 15 déborde sur la face interne de la plaque d'extrémité. Le matériau du raccord imprègne par ailleurs la zone 10 de l'extrémité du tube au voisinage de la plaque d'extrémité, de façon à boucher sa porosité et à éviter ainsi toute fuite par le raccord.

Dans le raccord représenté en fig. 3, le trou de la plaque d'extrémité est de diamètre interne légèrement supérieur au diamètre externe du tube. Le matériau du raccord est disposé dans le trou autour de l'extrémité du tube, et forme un bourrelet 15 autour de l'extrémité de ce dernier du côté interne de la plaque. Il imprègne également la zone 10 de l'extrémité du tube, de façon à éviter toute fuite prenant naissance dans celle-ci.

Le raccord représenté en fig. 4 comporte un épaulement circulaire 16 du côté externe de la plaque d'extrémité. Le matériau du raccord 14 est disposé tout autour du tube dans le trou de la plaque tubulaire, et remplit également la couronne circulaire 17 formée dans la plaque d'extrémité. Il forme encore un bourrelet 15 du côté interne de la plaque et imprègne l'extrémité du tube sur la même zone que dans les cas des figures précédentes.

La fig. 5 représente un raccord entre une plaque d'extrémité et un tube 3 comportant une couche interne de porosité plus fine 3B. Cette couche se prolonge par une couche 3C recouvrant la surface d'extrémité du tube, et une couche 3D recouvrant sur une certaine longueur, jusqu'au-delà de la face interne de la plaque d'extrémité, la surface externe du tube. Le raccord peut présenter alors la même forme que selon la fig. 4, avec un épaulement du côté de la face externe de la plaque d'extrémité. Dans le cas où le matériau du raccord est constitué par un émail ou un verre, il vient colmater la porosité des tubes dans la zone insérée dans la plaque d'extrémité. S'il est constitué par une matière céramique frittée, le colmatage dépend de la dimension des pores et peut alors être limité à une partie de la couche fine située dans la zone de raccordement.

Il est décrit ci-après en référence aux exemples 1 et 2 les procédés de fabrication d'éléments filtrants selon l'invention, avec raccords en émail silico-alumineux, en alumine frittée, en ciment ou en un alliage métallique.

Exemple 1: raccord constitué par une matière céramique frittée

On prépare des tubes poreux par un procédé analogue à celui décrit dans l'exemple I du document FR-A-2 463 636, à partir d'une pâte constituée d'un mélange de 75% d'alumine électrofondue de dimension moyenne de grains 35 microns et de 25% d'alumine «Alcoa» de surface spécifique d'environ 1 m2/g, que l'on ajoute à un mélange de 10 à 15% de pétrolatum et de 10 à 15% d'un gel de «Modocol» à 10%, ces pourcentages étant exprimés en poids par rapport à l'alumine sèche.

La pâte ainsi préparée est extrudée sous une pression de 100 bars sous forme de tubes d'une longueur de 750 mm, d'un diamètre extérieur 10 mm et d'épaisseur 1,5 mm.

On sèche ensuite les tubes à 100°C de façon à en éliminer les solvants organiques et les cuit en atmosphère réductrice à 1750°C. Les tubes obtenus ont un diamètre moyen de pores de 15 μm.

On effectue ensuite une première opération d'engobage à l'aide d'une suspension aqueuse à 9,5% en poids d'alumine «Baikowski 5AO». On obtient une bonne dispersion en soumettant 800 g de cette suspension à un brassage à 60 t/min pendant 15 h dans une bouteille en polyéthylène de 200 mm de diamètre et 400 mm de longueur, avec une charge de 4 kg de billes en céramique de 20 mm de diamètre.

On effectue alors l'engobage en faisant monter sous pression et descendre la suspension dans chaque tube posé en position verticale sur un ajutage étanche relié à la cuve contenant la suspension. Cette opération dure 4 à 5 secondes. On sèche les tubes.

Après séchage, on soumet l'intérieur de chaque tube mis en rotation à un brossage, de façon à éliminer l'alumine en surépaisseur.

On effectue alors un deuxième engobage au moyen d'une suspension préparée par mélange de 10 ml d'une barbotine A définie ci-dessous, de 130 g de pétrolatum et de 40 g d'essence de térébenthine.

La barbotine A est constituée:

d'une alumine Baikowski 5 AO du commerce, calcinée à 1450°C présentant une surface spécifique de l'ordre de 1 m2/g et une granulométrie répartie entre 1 et 5 μm.
de 7,5% du poids d'alumine sèche de sucre;
de 0,83% du poids d'alumine sèche d'alcool benzylique;
de 0,26% du poids d'alumine sèche de sulforicinate d'ammonium;
de 41% du poids d'alumine sèche de colophane blonde;
de 37,5% du poids d'alumine sèche d'huile de lin;

de 112% du poids d'alumine sèche d'essence de térébenthine.

On obtient une bonne dispersion de l'alumine en soumettant une quantité de barbotine A correspondant à 800 g d'alumine à un brassage à raison de 60 t/min pendant 60 heures dans une bouteille en polyéthylène de 200 mm de diamètre et 400 mm de longueur, avec une charge de 4 kg de billes en céramique de 20 mm de diamètre.

L'opération d'engobage est effectuée comme indiqué ci-dessus. On sèche le tube et on lui fait subir une cuisson en atmosphère oxydante à 1500°C.

On obtient ainsi sur les tubes une couche d'épaisseur 20 à 30 microns et de diamètre moyen de pores 1 micron.

On dépose ensuite sur cette couche une deuxième couche à porosité fine par une opération supplémentaire d'engobage avec une suspension de particules d'alumine d'un diamètre moyen de 0,5 μm, suivie d'un séchage et d'une cuisson en atmosphère oxydante à 1300°C. On obtient ainsi une 3ème couche dont l'épaisseur est de 20 à 30 μm et le diamètre moyen des pores est d'environ 0,2 μm.

On prépare par un procédé connu en soi de pressage, puis frittage, deux plaques d'extrémité en une composition céramique contenant 97% d'alumine. Ces plaques sont des disques d'un diamètre de 72 mm, d'une épaisseur de 8 mm, qui portent chacun 19 trous disposés en deux couronnes concentriques autour d'un trou central, le tout formant un motif hexagonal où la distance entre les axes des trous est de 12,5 mm. Le diamètre des trous est de 10,5 mm sur la moitié de leur longueur, et 7 mm sur l'autre moitié. La surface cylindrique qui forme la périphérie des plaques est usinée de façon à être lisse et à servir ainsi de portée à des joints toriques, afin de permettre un montage étanche de l'élément filtrant dans un carter métallique approprié.

L'élément filtrant est obtenu en assemblant 19 membranes tubulaires et deux plaques d'extrémité de la façon suivante: On prépare une barbotine très concentrée contenant 40% en volume d'une poudre minérale ayant la composition suivante (en % en poids):

| | |
|---|---|
| – Si $O_2$ | 72% |
| – $Al_2O_3$ | 14% |
| – MgO | 4% |
| – CaO | 4,5% |
| – $K_2O$ | 3% |
| – $Na_2O$ | 2,5% |

La composition de la barbotine est (en % en poids)

| | |
|---|---|
| Poudre minérale | 61% |
| Eau | 32% |
| Emulsion d'acétate de polyvinyle dans l'eau (à 50% d'extrait sec) | 7% |

Sa viscosité est de 3 poises.

On garnit la zone de contact entre les tubes et les rebords des trous des plaques au moyen de cette barbotine, on sèche, et on cuit à environ 1300°C en atmosphère oxydante. La partie minérale de la barbotine subit pendant cette cuisson une fusion partielle pendant laquelle elle reste très visqueuse mais s'écoule assez pour remplir par capillarité d'une part les espaces entre les tubes et les plaques d'extrémité, d'autre part la porosité des tubes sur une longueur d'environ 6 à 8 mm à partir de leur extrémité.

L'élément filtrant ainsi obtenu

– résiste à la corrosion par les acides et les bases courants, les oxydants et les solvants organique;

– supporte des différences de pression de 10 bars entre les deux parois des membranes tubulaires, et cela dans les deux sens, ce qui permet d'effectuer son décolmatage par mise sous pression de son côté extérieur;

    – permet la filtration de gaz jusqu'à 1000°C;

    – a un seuil de filtration de 0,2 μm.

Exemple 2

On prépare des membranes tubulaires en alumine poreuse d'un diamètre intérieur de 15 mm, d'une épaisseur de 2 mm et d'une longueur de 800 mm par le procédé mentionné à l'exemple 1, en s'arrêtant toutefois au stade de la seule couche-support.

Ces membranes ont dont un diamètre moyen de pore de 15 μm.

On prépare par ailleurs par un procédé connu de pressage, puis cuisson, des plaques d'extrémité en une composition céramique contenant 97% d'alumine. Ces plaques sont des disques d'un diamètre de 140 mm, d'une épaisseur de 15 mm, qui sont traversés de 19 trous disposés en un motif hexagonal comme dans l'exemple précédent, la distance entre les axes des trous étant de 23 mm. Chaque trou comporte une partie cylindrique d'un diamètre de 19,5 mm et d'une longueur de 10 mm où s'emboîtera un tube, suivie d'une partie cylindrique d'un diamètre de 15 mm et d'une longueur de 5 mm qui prolongera la surface intérieure du tube après montage.

Le montage s'effectue comme suit:

– On prépare une barbotine contenant 40% en volume de particules d'alumine d'un diamètre moyen de 3 microns en la défloculant au maximum au moyen d'un tensio-actif approprié tel que par exemple le «Darvan C» de la firme Polyplastic, ajouté à raison de 1% en poids par rapport à l'alumine.

La composition de cette barbotine est (en % en poids)

| | |
|---|---|
| Alumine | 69% |
| Darvan C | 0,7% |
| Carbowax 4000 (Union Carbide) | 5% |
| Eau | 25,3% |

– Une des plaques d'extrémité étant posée à plat, la partie des trous qui a un diamètre de 19,5 mm étant disposée vers le haut, on garnit de cette barbotine très consistante l'épaulement qui fait la transition entre les deux surfaces cylindriques de chaque trou et on met en place les tubes en veillant à bien écraser le volume de barbotine situé entre l'épaulement du trou et l'extrémité de chaque tube de façon à réaliser un bon contact.

– On retourne le faisceau de tubes assemblé sur sa plaque d'extrémité, et on opère de ême pour l'assemblage de l'autre extrémité des tubes dans les trous de la deuxième plaque d'extrémité.

– On sèche et on consolide les raccords par une cuisson en atmosphère oxydante à 1600°C.

L'élément filtrant obtenu, qui est entièrement constitué d'alumine, possède d'excellentes propriétés de résistance à la corrosion et de résistance mécanique. Il permet la filtration de gaz chauds jusqu'à une température de 1500°C. Son seuil de filtration est de 15 microns.

Exemple 3: raccords constitués par un ciment

On prépare 19 membranes tubulaires en alumine poreuse et deux plaques d'extrémité en alumine dense et étanche comme dans l'exemple 2.

On assemble l'élément filtrant comme dans l'exemple 2, mais en utilisant comme liant un ciment à base d'alumine et d'oxychlorure d'aluminium préparé comme suit:

– On prépare une pâte ayant la composition pondérale suivante:

86% de poudre d'alumine alpha d'une granulométrie étagée entre 0,5 et 5 μm,
5% de solution d'oxychlorure d'aluminium à 42%,
9% d'eau;

– on assemble la cartouche comme dans l'exemple 2, en garnissant de cette pâte l'épaulement qui fait la transition entre les deux surfaces cylindriques de chaque trou et en mettant en place les tubes de façon à bien écraser le volume de cette pâte situé entre l'épaulement du trou et l'extrémité de chaque tube;

– On fait durcir le ciment à l'oxychlorure d'aluminium par un traitement de 8 heures à 40°C;

– On consolide les raccords par une cuisson à 1200°C.

L'élément filtrant ainsi obtenu est entièrement constitué d'alumine.

Exemple 4: raccords constitués par un métal

On prépare 19 tubes identiques à ceux de l'exemple 2 et deux plaques d'extrémité en alliage «Dilver P 1» de la Société Imphy, dont la composition pondérale est de 54% Fe, 29% Ni, 17% Co, alliage dont le coefficient de dilatation est très voisin de celui de l'alumine.

Ces plaques sont de forme identique à celles de l'exemple 2, à la différence près que les trous qui recevront les tubes ont un diamètre de 19,1 mm sur une longueur de 2 mm et un diamètre de 15 mm sur le reste de la longueur.

L'élément filtrant est obtenu en assemblant 19 membranes tubulaires et deux plaques d'extrémité par un procédé bien connu de brasage céramique-métal qui se déroule de la façon suivante:

– On métallise l'extrémité des tubes (surfaces intérieure, extérieure et de chant) sur une longueur de 4 mm par application d'une suspension de poudre d'alliage molybdène-manganèse que l'on soumet à une cuisson réductrice à 1400°C.

– Sur la couche métallique ainsi obtenue, on dépose par un procédé galvanochimique une couche de nickel d'une épaisseur de 5 µm.

– On assemble l'élément filtrant en emboîtant les 19 tubes dans les trous des plaques d'extrémité et en reliant la partie métallisée des extrémités des tubes à la surface intérieure des trous des plaques d'extrémité par une brasure de composition pondérale 72% Ag et 28% Cu fondue par un traitement thermique à 780°C.

On obtient ainsi un élément filtrant à plaques d'extrémité métalliques raccordées aux membranes tubulaires par des raccords métalliques.

Les éléments filtrants ci-dessus décrits peuvent être employés en filtration directe ou en filtration tangentielle.

En filtration directe, une des plaques d'extrémité est alors pleine, et ne sert qu'à maintenir mécaniquement les extrémités fermées des tubes. En filration tangentielle, le fluide à filtrer entre par les trous de l'une des plaques d'extrémité, le filtrat passe à travers la membrane tubulaire, et le fluide non filtré sort par les trous de la deuxième plaque d'extrémité.

Ces éléments filtrants présentent une résistance chimique, une résistance mécanique et un caractère réfractaire. Ils permettent de filtrer des liquides ou des gaz corrosifs, des solvants, des oxydants, etc., et peuvent être nettoyés avec des liquides corrosifs, soit pour les décolmater, soit pour les stériliser avant emploi. Ils permettent une filtration avec des différences de pression considérables entre fluide à filtrer et filtrat. Dans le cas où l'on veut les décolmater par application d'une pression inverse, il n'y a pas de risque de décoller les couches poreuses les plus fines. Ils permettent enfin de filtrer des liquides ou des gaz très chauds.

**Revendications**

1. Élément de filtration comprenant au moins une plaque d'extrémité non poreuse (1, 2) en céramique, en carbone, en verre, en métal ou en matière synthétique, percée de trous, et une pluralité de tubes (3, 4) en céramique poreuse ou en carbone poreux, fixés dans les trous de la plaque d'extrémité par l'intermédiaire de raccords (5, 6, 7, 8) en un matériau remplissant des espaces entre l'extrémité des tubes et les trous de la plaque d'extrémité, caractérisé en ce que ce matériau est choisi dans le groupe formé par un émail, un verre, une matière céramique frittée, du carbone, un ciment, et un métal.

2. Élément selon la revendication 1, caractérisé par le fait que le matériau colmate les pores de la zone (10) de l'extrémité des tubes à la hauteur de la plaque d'extrémité.

3. Élément de filtration selon l'une des revendications 1 et 2, caractérisé en ce que le diamètre interne de chaque tube est égal au diamètre interne du trou correspondant de la plaque d'extrémité, et en ce que l'extrémité du tube est disposée dans un épaulement (13, fig. 2) de la plaque du côté interne de l'élément.

4. Élément de filtration selon l'une des revendications 1 et 2, caractérisé en ce que le diamètre externe de chaque tube est légèrement inférieur au diamètre interne du trou correspondant de la plaque d'extrémité, et en ce que ce dernier comprend du côté externe de l'élément un épaulement (16, fig. 4) qui est également rempli par le matériau (17) du raccord.

5. Élément de filtration selon l'une des revendications 1 à 4, caractérisé par le fait que les tubes comprennent au moins deux couches présentant des diamètres de pores différents, une couche épaisse à pores relativement gros et au moins une couche plus mince à pores plus fins.

6. Élément de filtration selon la revendication 5, caractérisé par le fait que le diamètre moyen des pores de la couche épaisse est compris entre 2 et 50 µm, celui de la couche la plus fine étant compris entre 0,002 et 40 µm.

7. Élément de filtration selon l'une des revendications 5 et 6, caractérisé en ce que la couche à pores plus fins (3B, 3C, 3D, fig. 5) vient recouvrir la surface de chant de l'extrémité du tube ainsi qu'une partie de la surface externe de cette extrémité.

8. Procédé de fabrication d'un élément de filtration selon l'une des revendications 1 à 7, dans lequel le raccord est en un émail ou un verre, caractérisé en ce qu'après avoir introduit les extrémités des tubes dans les trous d'une plaque d'extrémité, et rempli au moins en partie l'espace subsistant entre chaque tube et la plaque d'une barbotine très concentrée d'une poudre de l'émail ou du verre, on soumet la zone des extrémités des tubes et de la plaque à une cuisson entraînant une fusion au moins partielle de l'émail ou du verre et le remplissage par capillarité, par cet émail ou ce verre, de la totalité de cet espace et des pores des extrémités des tubes au voisinage de la plaque.

9. Procédé selon la revendication 8, caractérisé en ce que l'on colmate au cours d'une première cuisson les pores des extrémités des tubes entourées de la barbotine, avant de remplir au moins en partie l'espace subsistant entre chaque tube et la plaque de la barbotine et de soumettre la zone des extrémités des tubes et de la plaque à la cuisson.

10. Procédé de fabrication d'un élément de filtration selon l'une des revendications 1 à 7, dans lequel le raccord est en une céramique frittée, caractérisé en ce qu'après avoir introduit les extrémités des tubes dans les trous de la plaque d'extrémité, et rempli l'espace subsistant entre chaque tube et la plaque d'une barbotine d'une poudre de la céramique, on soumet la zone des extrémités des tubes et de la plaque à un traitement thermique assurant le frittage de la matière céramique.

11. Procédé de fabrication d'un élément de filtration selon l'une des revendications 1 à 7, dans lequel le raccord est en une céramique frittée, caractérisé en ce qu'après avoir introduit les extrémités des tubes dans les trous de la plaque d'extrémité et rempli l'espace subsistant entre chaque tube et la plaque d'une matière qui peut être décomposée par chauffage pour devenir un matériau céramique, on soumet la zone des extrémités des tubes et de la plaque à un traitement thermique assurant la formation du matériau céramique et son frittage.

12. Procédé selon l'une des revendications 8 à 11, caractérisé en ce que l'on répète à plusieurs reprises les opérations de remplissage de l'espace subsistant entre chaque tube et la plaque et de traitement thermique jusqu'à obtenir une étanchéité parfaite de la jonction entre les tubes et la plaque.

**Patentansprüche**

1. Filterelement, das mindestens eine nichtporöse Endplatte (1, 2) aus Keramik, Kohlenstoff, Glas, Metall oder aus einem Kunststoff, in die Löcher gebohrt sind, und eine Vielzahl von Rohren (3, 4) aus poröser Keramik oder aus porösem Kohlenstoff aufweist, die in den Löchern der Endplatte über Anschlüsse (5, 6, 7, 8) aus einem Material befestigt sind, das die Räume zwischen dem Ende der Rohre und den Löchern der Endplatte ausfüllt, dadurch gekennzeichnet, dass dieses Material aus der Gruppe ausgewählt wird, die aus einem Email, einem Glas, einem gesinterten Keramikmaterial, Kohlenstoff, Zement und einem Metall gebildet wird.

2. Element nach Anspruch 1, dadurch gekennzeichnet, dass das Material die Poren des Bereichs (10) des Endes der Rohre in Höhe der Endplatte verschliesst.

3. Filterelement nach einem der Ansprüche 1 und 2, dadurch gekennzeichnet, dass der Innendurchmesser jedes Rohres gleich dem Innendurchmesser des entsprechenden Lochs der Endplatte ist und dass das Rohrende an einer Schulter (13, Fig. 2) der Platte auf der Innenseite des Elements liegt.

4. Filterelement nach einem der Ansprüche 1 und 2, dadurch gekennzeichnet, dass der Aussendurchmesser jedes Rohres geringfügig kleiner ist als der Innendurchmesser des entsprechenden Lochs der Endplatte und dass dieses letztere auf der Aussenseite des Elements eine Schulter (16, Fig. 4) aufweist, die ebenfalls mit dem Anschlussmaterial (17) gefüllt ist.

5. Filterelement nach einem der Ansprüche 1 bis 4, dadurch gekennzeichnet, dass die Rohre mindestens zwei Schichten mit unterschiedlichem Porendurchmesser aufweisen, eine dicke Schicht mit relativ grossen Poren und mindestens eine dünnere Schicht mit feineren Poren.

6. Filterelement nach Anspruch 5, dadurch gekennzeichnet, dass der mittlere Durchmesser der Poren der dicken Schicht zwischen 2 und 50 µm und der der dünneren Schicht zwischen 0,002 und 40 µm liegt.

7. Filterelement nach einem der Ansprüche 5 und 6, dadurch gekennzeichnet, dass die Schicht mit dünneren Poren (3B, 3C, 3D, Fig. 5) die Schnittkante des Rohrendes und einen Teil der äusseren Oberfläche dieses Endes bedeckt.

8. Verfahren zur Herstellung eines Filterelements nach einem der Ansprüche 1 bis 7, bei dem der Anschluss aus Email oder einem Glas ist, dadurch gekennzeichnet, dass zuerst die Enden der Rohre in die Löcher einer Endplatte eingeführt und zumindest zum Teil der zwischen jedem Rohr und der Platte verbleibende Raum mit einer sehr konzentrierten Masse aus einem Email- oder Glaspulver gefüllt wird, ehe der Bereich der Rohrenden und der Platte einer Erhitzung unterzogen wird, die ein zumindest partielles Schmelzen des Emails oder des Glases bewirkt, wobei sich der gesamte Zwischenraum und die Poren der Rohrenden in der Nähe der Platte durch Kapillarität mit diesem Email oder diesem Glas füllen.

9. Verfahren nach Anspruch 8, dadurch gekennzeichnet, dass während eines ersten Erhitzens die Poren der von der Masse umgebenen Rohrenden verstopft werden, ehe der verbleibende Bereich zwischen jedem Rohr und der Platte mit der Masse gefüllt und ehe der Bereich der Rohrenden und der Platte der Erhitzung unterworfen wird.

10. Verfahren zur Herstellung eines Filterelements gemäss einem der Ansprüche 1 bis 7, bei dem der Anschluss aus gesinterter Keramik besteht, dadurch gekennzeichnet, dass zuerst die Enden der Rohre in die Löcher der Endplatte eingeführt werden und der verbleibende Raum zwischen jedem Rohr und der Platte mit einer Masse aus einem Keramikpulver gefüllt wird und dass dann der Bereich der Rohrenden und der Platte einer Wärmebehandlung unterzogen wird, die das Sintern des Keramikmaterials bewirkt.

11. Verfahren zur Herstellung eines Filterelements nach einem der Ansprüche 1 bis 7, bei dem der Anschluss aus einer gesinterten Keramik besteht, dadurch gekennzeichnet, dass zuerst die Rohrenden in die Löcher der Endplatte eingeführt und der verbleibende Raum zwischen jedem Rohr und der Platte mit einem Material gefüllt wird, das durch Erhitzen zersetzt werden kann, um ein Keramikmaterial zu werden, worauf der Bereich der Rohrenden und der Platte einer Wärmebehandlung unterzogen wird, die die Bildung des Keramikmaterials und seine Sinterung bewirkt.

12. Verfahren nach einem der Ansprüche 8 bis 11, dadurch gekennzeichnet, dass man die Schritte des Füllens des zwischen jedem Rohr und der Platte verbleibenden Raums und der Wärmebehandlung mehrere Male wiederholt, bis man eine perfekte Dichtheit der Verbindung zwischen den Rohren und der Platte erreicht.

**Claims**

1. A filter element comprising at least one non porous end plate (1, 2) made of a ceramic, carbon, glass, metal or synthetic material pierced by holes, and a plurality of tubes (3, 4) made of porous ceramic or porous carbon material, fixed in the holes of the end plate through connections (5, 6, 7, 8) of a material which fills the spaces between the end of the tubes and the holes of the end plate, characterized in that this material is chosen from the group constituted by an enamel, a glass, a sintered ceramic material, carbon, a cement and a metal.

2. An element according to claim 1, characterized in that the material closes the pores over an end region (10) of the tubes at the level of the end plate.

3. A filter element according to one of claims 1 and 2, characterized in that the inside diameter of each tube is equal to the inside diameter of the corresponding hole in the end plate, and in that the end of the tube is disposed in a shoulder (13, fig. 2) of the plate on the inside of the element.

4. A filter element according to one of claims 1 and 2, characterized in that the outside diameter of each tube is slightly smaller than the inside diameter of the corresponding hole of the end plate, and in that the latter comprises on the outside of the element a shoulder (16, fig. 4) which is equally filled with the material (17) of the connection.

5. A filter element according to one of claims 1 to 4, characterized in that the tubes comprise at least two layers having pores of different diameters, a thick layer with relatively large pores and at least one thin layer with smaller pores.

6. A filter element according to claim 5, characterized in that the average diameter of the pores of the thick layer lies in the range of 2 to 50 μm and the average diameter of the pores in the thinner layer lies in the range of 0,002 to 40 μm.

7. A filter element according to one of claims 5 and 6, characterized in that the layer with finer pores (3B, 3C, 3D, fig. 5) extends over the cut surface at the end of the tube as well as over a part of the outside surface of this end.

8. A method of manufacturing a filter element according to one of claims 1 to 7, in which the connection is of an enamel or a glass, characterized in that after having introduced the ends of the tubes into the holes of an end plate and filled at least partially the residual interspace between each tube and the plate with a highly concentrated clay of an enamel or glass powder, the area of the ends of the tubes and the plate are submitted to a baking process causing an at least partial melting of the enamel or the glass and the filling by capillary effect of all of this space and the pores of the ends of the tubes near the plate, with this enamel or this glass.

9. A method according to claim 8, characterized in that during a first baking step, the pores of the ends of the tubes surrounded by filler material clay are sealed, and then the space remaining between each tube and the plate is filled at least partially with the clay and the area of the ends of the tubes and the plate are submitted to the baking process.

10. A method for manufacturing a filter element according to one of claims 1 to 7, in which the connection is made of a sintered ceramic material, characterized in that after having introduced the ends of the tubes into the holes of the end plate and after having filled the interspace subsisting between each tube and the plate with a clay of a ceramic powder, the area of the ends of the tubes and of the plate is submitted to a thermal treatment ensuring the sintering of the ceramic material.

11. A method for manufacturing a filter element according to one of claims 1 to 7, in which the connection is made of a sintered ceramic material, characterized in that after having introduced the ends of the tubes into the holes of the end plate and after having filled the interspace subsisting between each tube and the plate with a material which can be transformed through heating into a ceramic material, the area of the ends of the tubes and of the plate is submitted to a thermal treatment ensuring the formation of the ceramic material and its sintering.

12. A method according to one of claims 8 to 11, characterized in that the operations of filling the interspace subsisting between each tube and the plate and of the thermal treatment are repeated several times until a perfect sealing of the junction between the tubes and the plate is obtained.

FIG.1

FIG.2

FIG.3

FIG.4

FIG.5